# EUROPÄISCHE PATENTANMELDUNG

(11) **EP 4 455 064 A1**
(43) Veröffentlichungstag der Anmeldung: **30.10.2024**
(21) Anmeldenummer: 23184279.0
(22) Anmeldetag: 07.07.2023
(51) Int. Cl.: B65H 5/22, B65H 29/24

(54) **WERKSTÜCKTRÄGER, TRANSPORTSYSTEM MIT MEHREREN SOLCHER WERKSTÜCKTRÄGER, SOWIE VERWENDUNG ZUR VEREINZELUNG VON WERKSTÜCKEN, INSBESONDERE BEI EINER BATTERIEHERSTELLUNG**

(30) Priorität: 27.04.2023 DE 102023110843
(71) Anmelder: Grob-Werke GmbH & Co. KG, 87719 Mindelheim (DE)
(72) Erfinder: Fritz, Alexander, 89297 Schießen (DE)
(74) Vertreter: KASTEL Patentanwälte PartG mbB

(57) **Zusammenfassung**

Um ein Materialhandling von Materialbahnen hinsichtlich der Positionierung und Prozesssicherheit zu verbessern, schafft die Erfindung einen Werkstückträger (26) zum Übernehmen, Transportieren und Übergeben eines als Segment einer Materialbahn (14) ausgebildeten Werkstücks (12), mit einer an einem Trägerkörper (36) ausgebildeten Auflagefläche (38) zum Auflegen des Werkstücks (12) und einer Ansaugeinrichtung (40) zum Ansaugen des Werkstücks (12) auf der Auflagefläche (38), wobei die Ansaugeinrichtung (40) wenigstens eine bewegliche Saugdüse (42, 42.1, 42.2) aufweist, die in Ruhestellung aus der Auflagefläche (38) hervorsteht und bei Beaufschlagung mit Unterdruck entgegen einer die Saugdüse (42, 42.1, 42.2) in Ruhestellung haltenden Kraft in eine Einfahrstellung bewegbar ist, in der die Saugdüse (42, 42.1, 42.2) nicht über die Auflagefläche (38) hervorsteht.

## Beschreibung

Die Erfindung betrifft einen Werkstückträger zum Übernehmen, Transportieren und Übergeben eines als Segment einer Materialbahn ausgebildeten Werkstücks. Weiter betrifft die Erfindung ein Transportsystem umfassend eine Führungsbahn und mehrere der Werkstückträger. Weiter betrifft die Erfindung eine Verwendung eines solchen Werkstückträgers bei der Herstellung von Elektroden für eine Batteriezelle. Weiter betrifft die Erfindung ein insbesondere computergesteuert automatisches Vereinzelungsverfahren zum Vereinzeln von flachen Werkstücken von einer Materialbahn unter Verwendung eines solchen Werkstückträgers sowie eine zum Durchführen des Vereinzelungsverfahrens eingerichtete Vereinzelungsvorrichtung. Schließlich betrifft die Erfindung ein Computerprogramm mit Anweisungen zum Durchführen des Vereinzelungsverfahrens.

Bevorzugte Ausgestaltungen der Erfindung betreffen das Gebiet des Materialhandlings und mehr insbesondere ein System und ein Verfahren für die Übernahme eines bahnförmigen Werkstücks, anschließende Vereinzelung und Übergabe des Werkstücks an eine Transporteinrichtung zur weiteren Verarbeitung, vorzugsweise in Form einer sich drehenden Vakuumtrommel, in einem kontinuierlichen Prozess.

Zum technologischen Hintergrund wird insbesondere auf folgende Literaturstellen verwiesen:
[1] WO 2020/192 845 A1
[2] DE 20 2014 004 053 U1

Aus [1] sind Verfahren und Vorrichtungen zur Bereitstellung von Elektrodensträngen sowie zur Herstellung von Monozellen und daraus gebildeten Batteriestapeln bekannt. Insbesondere beschreibt [1] eine Anlage zur Produktion von Batteriezellen, bei der als Elektrodenstränge ein Anodenstrang mit auf einem ersten bahnförmigen Separator (S) angebrachten Anoden (A) und ein Kathodenstrang mit auf einem zweiten bahnförmigen Separator (S) angebrachten Kathoden (K) bereitgestellt werden, wobei daraus ein Strangverbund gebildet wird, von dem Monozellen vereinzelt werden. Hierzu werden die Elektroden von einem bahnförmigen Elektrodensubstrat vereinzelt und auf einer Separatorbahn laminiert. Dabei ist eine genaue Positionierung der Elektroden wichtig.

Aus der Literaturstelle [2] sind bewegliche Saugdüsen in Form von Vakuumsaugnosseln bekannt, die für das Handling von Deckeln für Joghurtbecher eingesetzt werden.

Die Erfindung hat sich zur Aufgabe gestellt, Lösungen zum positionsgenauen Übernehmen, Transportieren und Übergeben eines als Segment einer Materialbahn ausgebildeten Werkstücks, wie z.B. einem Elektrodensegment, bereitzustellen.

Zum Lösen dieser Aufgabe schafft die Erfindung einen Werkstückträger nach Anspruch 1. Ein Transportsystem mit mehreren derartiger Werkstückträger, eine Verwendung des Werkstückträgers bei der Batteriezellproduktion sowie ein Verfahren und eine Vorrichtung zur Vereinzelung von Werkstücken unter Einsatz eines solchen Werkstückträgers sowie ein Computerprogramm mit entsprechenden Steueranweisungen sind Gegenstand der Nebenansprüche.

Vorteilhafte Ausgestaltungen sind Gegenstand der Unteransprüche.

Die Erfindung schafft gemäß einem Aspekt davon einen Werkstückträger zum Übernehmen, Transportieren und Übergeben eines als Segment einer Materialbahn ausgebildeten Werkstücks, mit einer an einem Trägerkörper ausgebildeten Auflagefläche zum Auflegen des Werkstücks und einer Ansaugeinrichtung zum Ansaugen des Werkstücks auf der Auflagefläche, wobei die Ansaugeinrichtung wenigstens eine bewegliche Saugdüse aufweist, die in Ruhestellung aus der Auflagefläche hervorsteht und bei Beaufschlagung mit Unterdruck entgegen einer die Saugdüse in Ruhestellung haltenden Kraft in eine Einfahrstellung bewegbar ist, aus der die Saugdüse nicht über die Auflagefläche hervorsteht.

Bei einigen Ausführungsformen ist zum Bilden der beweglichen Saugdüse ein Befestigungsbereich eines elastischen oder aus mehreren Teilen (z.B. teleskopartig) bestehenden Düsenkörpers fest am Trägerkörper befestigt, so dass sich die Düsenöffnung durch die Beweglichkeit der Saugdüse in sich bewegen kann. Der Begriff "bewegliche Saugdüse" umfasst demnach Ausführungen, bei denen die Saugdüse am Trägerkörper beweglich befestigt ist oder auch Ausführungen, bei denen die Saugdüse in sich beweglich ist, z. B indem sie aus einem elastischen Material gebildet ist.

Es ist bevorzugt, dass die Ansaugeinrichtung wenigstens einen ersten Luftkreis mit wenigstens einer ersten Ansaugdüse zum Ansaugen des Werkstücks auf die Auflagefläche und einen zweiten Luftkreis mit wenigstens einer zweiten Ansaugdüse zum Ansaugen des Werkstücks auf die Auflagefläche aufweist, wobei der erste und zweite Luftkreis unterschiedlich ansteuerbar sind.

Es ist bevorzugt, dass die wenigstens eine erste Ansaugdüse als erste bewegliche Saugdüse ausgebildet ist und/oder dass die wenigstens eine zweite Ansaugdüse als zweite bewegliche Saugdüse ausgebildet ist.

Es ist bevorzugt, dass die wenigstens eine erste Ansaugdüse in Transportrichtung vor der wenigstens einen zweiten Ansaugdüse angeordnet ist.

Es ist bevorzugt, dass der erste Luftkreis eine erste Luftkammer in dem Trägerkörper aufweist, wobei wenigstens eine erste bewegliche Saugdüse an die erste Luftkammer angeschlossen ist, und dass der zweite Luftkreis eine zweite Luftkammer in dem Trägerkörper aufweist, wobei wenigstens eine zweite bewegliche Saugdüse an die zweite Luftkammer angeschlossen ist.

Es ist bevorzugt, dass die erste Luftkammer einen ersten Luftanschluss seitlich oder auf der der Auflagefläche entgegengesetzten Seite des Trägerkörpers aufweist und die zweite Luftkammer einen zweiten Luftanschluss seitlich oder auf der der Auflagefläche entgegengesetzten Seite des Trägerkörpers aufweist.

Es ist bevorzugt, dass Luftanschlüsse des ersten und zweiten Luftkreises in Transportrichtung versetzt zueinander liegen.

Es ist bevorzugt, dass der Werkstückträger als Transporteinheit eines Transportsystems mit einzeln bewegbaren Transporteinheiten ausgebildet ist. Insbesondere ist die Bewegung der einzelnen Transporteinheiten einzeln ansteuerbar. Derartige Transportsysteme mit einzeln ansteuerbar bewegbaren Transporteinheiten sind grundsätzlich bekannt (z.B. ein Beckhoff XTS, ein sogenanntes Moversystem mit frei verfahrbaren Movern, oder ein Transportsystem von B&R Supertrack).

Gemäß einem weiteren Aspekt schafft die Erfindung auch ein Transportsystem umfassend eine Führungsbahn und mehrere Werkstückträger nach einer der voranstehenden Ausgestaltungen, die als Transporteinheiten einzeln entlang der Führungsbahn beweglich sind. Insbesondere ist das Transportsystem computergesteuert und dazu eingerichtet, die Transporteinheiten einzeln angesteuert zu bewegen.

Gemäß einem weiteren Aspekt schafft die Erfindung ein Verwenden eines Werkstückträgers nach einer der voranstehenden Ausgestaltungen bei der Herstellung von Elektroden für eine Batteriezelle.

Gemäß einem weiteren Aspekt schafft die Erfindung eine Vereinzelungsvorrichtung zum Vereinzeln von flachen Werkstücken von einer Materialbahn, umfassend eine Zuführeinrichtung zum Zuführen der Materialbahn, eine Schneideinrichtung zum Schneiden der Materialbahn, um die Werkstücke zu erhalten, eine Vakuumtrommel zum Abtransport der Werkstücke und eine Reihe von Werkstückträgern nach einer der voranstehenden Ausgestaltungen oder ein Transportsystem der voranstehend erläuterten Ausgestaltung mit den Werkstückträgern als einzeln bewegbare Transporteinheiten sowie eine computerimplementierte Steuerung, die die Werkstückträger ansteuert zum Aufnehmen der Materialbahn, Transport durch die Schneideinrichtung und Übergabe der Werkstücke auf die Vakuumtrommel.

Gemäß einem weiteren Aspekt schafft die Erfindung ein Vereinzelungsverfahren zum Vereinzeln von flachen Werkstücken von einer Materialbahn, umfassend
a) Bereitstellen der Materialbahn,
b) Aufnehmen der Materialbahn mit mehreren nacheinander in einer Transportrichtung bewegten Werkstückträger nach einem der Ansprüche 1 bis 8, wobei zuerst eine in Transportrichtung vordere bewegliche Saugdüse mit Unterdruck beaufschlagt wird und dann eine in Transportrichtung hintere bewegliche Saugdüse mit Unterdruck beaufschlagt wird,
c) Transportieren der Werkstückträger mit daran angesaugter Materialbahn durch eine Schneideinrichtung und Schneiden der Materialbahn zwischen zwei aufeinander folgenden Werkstückträgern, um auf den Werkstückträgern liegende Segmente der Materialbahn zu Werkstücken zu vereinzeln;
d) Übergeben der Werkstücke an eine Vakuumtrommel zum Abtransport, wobei zunächst eine in Transportrichtung vordere bewegliche Saugdüse unterdrucklos und dann eine in Transportrichtung hintere bewegliche Saugdüse unterdrucklos geschaltet wird.

Vorzugsweise umfasst Schritt d) den Schritt:
d1) Gegenblasen durch die unterdrucklos geschaltete Saugdüse, um die Übergabezeit zur Übergabe des Werkstücks zu verkürzen.

Vorzugsweise umfasst Schritt d) den Schritt:
d2) Anlegen des Werkstücks an die Vakuumwalze unter Anwendung der die jeweilige Saugdüse in Ruhestellung haltende Kraft als Rückstellkraft.

Vorzugsweise umfasst Schritt d) den Schritt:
d3) Auferlegen einer Rückstellkraft der jeweiligen Saugdüse auf das Werkstück, um dieses gegen die Vakuumwalze zu drücken, um einen Positionsverlust bei der Übergabe zu verhindern.

Gemäß einem weiteren Aspekt schafft die Erfindung eine Verwendung der Vereinzelungsvorrichtung oder des Vereinzelungsverfahren nach einer der voranstehenden Ausgestaltungen bei der Herstellung von Batteriezellen, insbesondere zur Vereinzelung von Elektroden von einer Elektrodenbahn.

Gemäß einem weiteren Aspekt schafft die Erfindung ein Computerprogramm, umfassend Anweisungen, die die Vereinzelungsvorrichtung veranlassen, das Vereinzelungsverfahren durchzuführen.

Bevorzugte Ausgestaltungen der Erfindung betreffen eine Einheit zur Übernahme von Elektrodenbahnen und Übergabe von geraden Sheets an eine rotierende Vakuumwalze.

Bei bevorzugten Ausgestaltungen der Erfindung wird die Eigenschaft spezieller Vakuumsaugnosseln - Beispiel für bewegliche Saugdüse - so genutzt, dass ein Ausgleich von Dickentoleranzen und Fertigungstoleranzen erfolgt. Zudem kann das Werkstück, beispielsweise eine Elektrode, beschädigungsfrei und ohne großen Kraftaufwand an eine runde Trommel übergeben werden, wogegen sich bisher eine Übergabe zwischen flachen Bahnen und runden Elementen als besonders herausfordernd dargestellt hat. Zudem stellt bisher die Übernahme eines bahnförmigen Elements auf einen vorbeifahrenden Warenträger eine Herausforderung dar.

Ein Materialhandling durch übliche Warenträger mit integrierten Vakuumbohrungen ohne sonstige integrierte Baugruppen sorgen z.B. für einen häufigen Abriss der Bahn vom Warenträger bei der Übernahme einer Elektrodenbahn und erfordern für die Übergabe der vereinzelten Bahnabschnitte ein aufwändiges mechanisches Nachführen des Warenträgers an der Vakuumtrommel, welches aufwändig und kompliziert zu erstellen ist.

Vorteilhafte Ausgestaltungen der Erfindung haben die Funktion, die Übernahmen und Übergaben von verschieden dicken Bahnen und Bahnstücken so umzusetzen, dass Dickenänderungen der Materialbahn, z.B. Elektroden-Bahn, sowie Fertigungstoleranzen an den beteiligten Bauteilen ausgeglichen werden und der Übergabeprozess unter verschiedenen Prozessparametern funktioniert.

Hierzu wird gemäß vorteilhaften Ausgestaltungen der Erfindung ein Werkstückträger mit beweglichen oder flexiblen Düsen zum Ansaugen des Werkstücks auf den Werkstückträger vorgesehen.

Gemäß einigen vorteilhaften Ausführungsformen der Erfindung werden in eine zu bewegende Kassette oder einen zu bewegenden Werkstückträger mindestens zwei separate Luftkreise eingearbeitet. Daran angeschlossen werden je nach Produktgröße variierende Anzahlen an flexiblen oder beweglichen Düsen oder Saugnosseln.

Die Ansteuerung der Luftkreise erfolgt vorzugsweise in zeitlich versetztem Abstand, sodass die zu transportierende und gegebenenfalls aufzutrennende Bahn im ersten Schritt langsam während dem Vorbeifahren der Kassette/dem Werkstückträger an einer Zuführeinrichtung durch Ansaugen der Bahn von der Zuführeinrichtung abgelöst wird.

Vorzugsweise wird hierfür zunächst der vorlaufende Luftkreis mit Vakuum beaufschlagt, nach zeitlichem Abstand jeweils der oder die nachlaufenden Luftkreise.

Vorzugsweise ziehen sich durch Kontakt mit der Bahn die in die Kassette/en Werkstückträger verbauten Saugnosseln (flexiblen/beweglichen Düsen) bei Aktivieren des Vakuums zusammen und schließen bündig mit der Auflage der Kassette/dem Werkstückträger ab, somit liegt die Bahn flächig auf der Oberfläche auf.

Der Warenträger/ die Kassette werden vorzugsweise mit angesaugter Bahn weitertransportiert, anschließend folgt bei einigen Ausführungsformen das Abtrennen des angesaugten Bahnabschnitts. Das nun vereinzelte Werkstück wird zu einer Übergabestelle verfahren.

Hier wird im vorlaufenden Luftkreis das Vakuum gelöst, die Saugnosseln gehen in die Ursprungsposition zurück und drücken den Bahnabschnitt an eine Transporteinrichtung zur weiteren Verarbeitung, z.B. eine Vakuumwalze. Durch das Halten des Vakuums im nachlaufenden Luftkreis bleibt die Bahn fixiert und erfährt keinen Positionsverlust bei der Übergabe, da die Bahn an Warenträger/Kassette und Transporteinrichtung (Trommel/Vakuumwalze) gleichzeitig fixiert, insbesondere angesaugt ist.

In zeitlichem Abstand wird in allen Kammern das Vakuum gelöst.

Vorteile bevorzugter Ausgestaltungen der Erfindung liegen darin, dass im Gegensatz zur Aufnahme über Vakuumbohrungen in der Kassette/ dem Warenträger der Hub der Saugnosseln zum Ausgleich möglicher Toleranzen und verschiedenen Materialstärken benutz werden kann.

Das Ausfahren der Saugnosseln sorgt im Übergabemoment für eine Übergabe ohne Positionsverlust, da das Werkstück beschädigungsfrei an die Transporteinrichtung wie z.B. Vakuumtrommel übergeben werden kann und sich zu keinem Zeitpunkt in einem Schwebezustand befindet.

Hierdurch können Überwachungssysteme sowie Positionskorrektur aus der Konstruktion ausgespart werden.

Das gleiche gilt in umgekehrter Reihenfolge für die Übernahme der (Elektroden)Bahn von einer Zuführeinrichtung.

Des Weiteren funktionieren die Übergaben und Übernahmen mit gleichbleibender Qualität auch wenn beispielsweise die Geschwindigkeit angepasst wird, da die Luftkreise positionsgesteuert aktiviert werden können.

Ausführungsbeispiel werden im Folgenden anhand der beigefügten Zeichnungen näher erläutert. Darin zeigt:
- Fig. 1: eine schematische seitliche Übersichtsdarstellung einer Ausführungsform einer Vereinzelungsvorrichtung mit einem Transportsystem, das einzeln bewegbare Transporteinheiten in Form von Werkstückträgern zum Übernehmen, Transportieren und Übergeben eines als Segment einer Materialbahn ausgebildeten Werkstücks aufweist;
- Fig. 2: eine schematische seitliche Ansicht eines der Werkstückträger ohne Werkstück in der Ausgangsposition gemäß Detail II von Fig. 1;
- Fig. 3: eine schematische seitliche Schnittansicht des Werkstückträgers, bei vollständig aktiviertem Vakuum, dargestellt ohne Werkstück;
- Fig. 4: eine Draufsicht auf den Werkstückträger;
- Fig. 5: eine schematische Schnittdarstellung durch eine bewegliche Saugdüse des Werkstückträgers in einer ersten Ausführungsform;
- Fig. 6: eine schematische Schnittdarstellung durch eine bewegliche Saugdüse des Werkstückträgers in einer zweiten Ausführungsform; und
- Fig. 7: eine schematische Schnittdarstellung durch eine bewegliche Saugdüse des Werkstückträgers in einer dritten Ausführungsform.

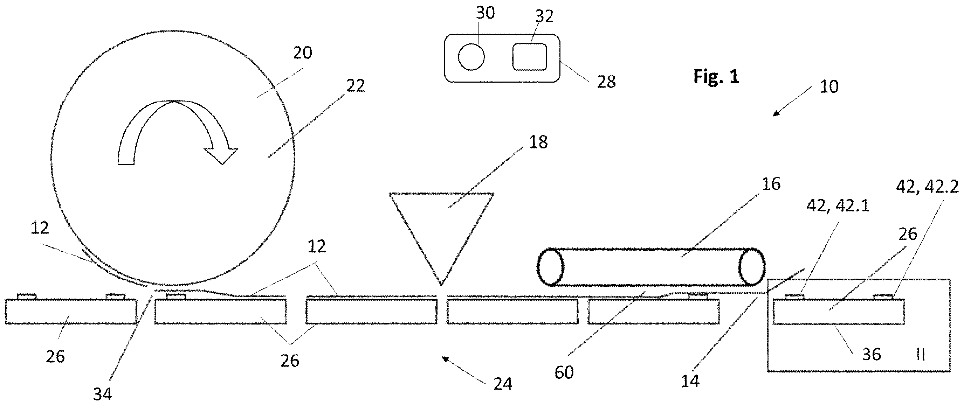

In Fig. 1 ist eine schematische Ansicht einer möglichen Ausführungsform einer Vereinzelungsvorrichtung 10 zum Vereinzeln von flachen Werkstücken 12 von einer Materialbahn 14 dargestellt.

Die Vereinzelungsvorrichtung 10 kann z. B. Teil einer Herstellanlage für Batteriezellen sein (siehe z.B. die Literaturstelle [1]) und dient z.B. zum Vereinzeln von Elektroden wie Anoden oder Kathoden von einem bahnförmigen Elektrodensubstrat. Die vereinzelten Elektroden können anschließend weiterverarbeitet werden, z.B. auf eine Separatorbahn zum Bilden eines Elektrodenstrangs laminiert werden oder, z.B. mit einer Separatorbahn durch Z-Faltung oder dergleichen, durch Aufstapelung zu einem Batteriezellstapel zusammengefügt werden.

Die Vereinzelungsvorrichtung 10 weist eine Zuführeinrichtung 16 zum Zuführen der Materialbahn 14, eine Schneideinrichtung 18 zum Schneiden der Materialbahn 14, um so die Werkstücke 12 zu erhalten, eine Transporteinrichtung 20, hier insbesondere in Form einer Vakuumtrommel 22, zum Abtransport der Werkstücke 12 und ein Transportsystem 24 mit einzeln bewegbaren Transporteinheiten in Form von Werkstückträgern 26 sowie eine computerimplementierte Steuerung 28 auf, die die Werkstückträger 26 ansteuert zum Aufnehmen der Materialbahn 14, Transport durch die Schneideinrichtung 18 und Übergabe der Werkstücke 12 auf die Vakuumtrommel 22.

Die Steuerung 28 weist einen Prozessor 30 und einen Speicher 32 auf, in dem ein Computerprogramm mit Steueranweisungen gespeichert ist.

Die Schneideinrichtung 18 weist z.B. einen durch die Steuerung 28 angesteuerten Schneidlaser (nicht dargestellt) auf.

Das Transportsystem 24 weist eine umlaufende Führungsbahn (nicht dargestellt) für die als Werkstückträger 26 ausgebildeten Transporteinheiten auf, deren Bewegung einzeln entsprechend einem gewünschten Prozessablauf ansteuerbar ist. Der Grundaufbau für ein derartiges Transportsystem 26 ist grundsätzlich bekannt (z.B. das Transportsystem Beckhoff XTS) und auf dem Markt erhältlich.

Die Vakuumtrommel 22 weist an ihrer Umfangsoberfläche Saugöffnungen auf. Durch Anlegen eines Vakuums im Inneren der Vakuumtrommel 22 können die flachen Werkstücke 12 an einer Übergabestelle 34 von dem jeweiligen Werkstückträger 26 aufgenommen werden und an der Umfangsoberfläche zum Abtransport fixiert werden.

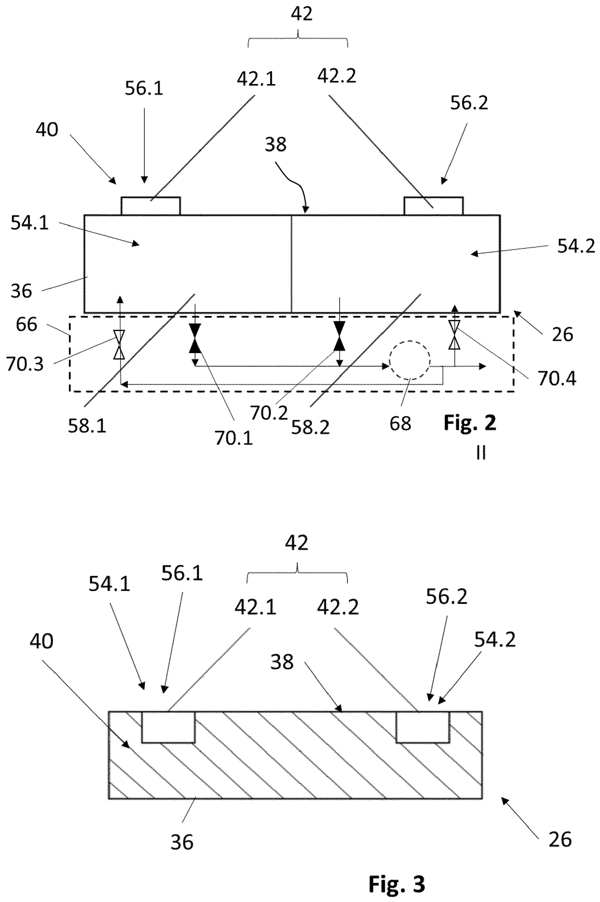

Im Folgenden werden anhand der Darstellungen in den Fig. 2 bis 7 vorteilhafte Ausgestaltungen des Werkstückträgers 26 näher erläutert.

Der Werkstückträger 26 ist zum Übernehmen, Transportieren und Übergeben des als Segment der Materialbahn 14 ausgebildeten Werkstücks 12 ausgebildet. Der Werkstückträger 26 weist einen Trägerkörper 36, eine an dem Trägerkörper 36 ausgebildete Auflagefläche 38 zum Auflegen des Werkstücks 12 und eine Ansaugeinrichtung 40 zum Ansaugen des Werkstücks 12 auf der Auflagefläche 40 auf. Die Ansaugeinrichtung 40 weist wenigstens eine bewegliche Saugdüse 42 (auch Saugnossel genannt) auf.

Die Saugdüse 42 steht in Ruhestellung aus der Auflagefläche 40 hervor.

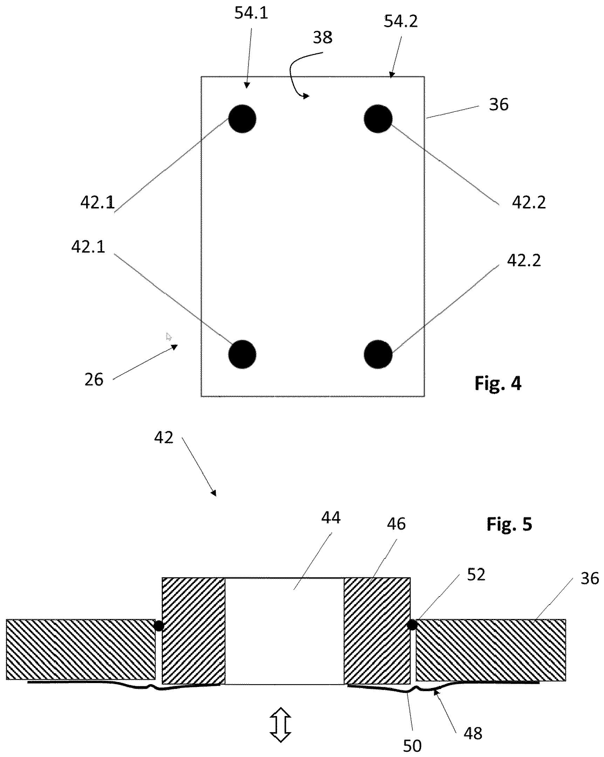

Mögliche Ausführungsbeispiele für die Saugdüse 42 sind in den Fig. 5 bis 7 in der jeweiligen Ruhestellung abgebildet.

Die Saugdüse 42 weist eine Düsenöffnung 44 mit beweglicher Berandung 46 auf, die durch einen Kraftspeicher 48, wie beispielsweise eine mechanische Feder oder ein elastisches Material, wie insbesondere eine Membran oder eine Balgausbildung oder dergleichen in die Ruhestellung gedrängt wird.

Bei der in Fig. 5 dargestellten Ausführung ist die Berandung 46 durch ein teleskopartig bewegbares Ringelement gebildet, das durch eine Membranfeder 50 als Kraftspeicher 48 in die Ruhestellung vorgespannt ist. Die Membranfeder 50 kann gleichzeitig als Dichtung ausgebildet sind, alternativ oder zusätzlich können weitere Dichtungen 52 vorgesehen sein. Anstelle der Membranfeder 50 können auch andere Federn wie Druckfedern oder Zugfedern vorgesehen sein.

Demnach ist bei einigen Ausführungsformen die Saugdüse 42 insgesamt entgegen der Kraft eines Kraftspeichers 48 beweglich an dem Trägerkörper 36 gehalten.

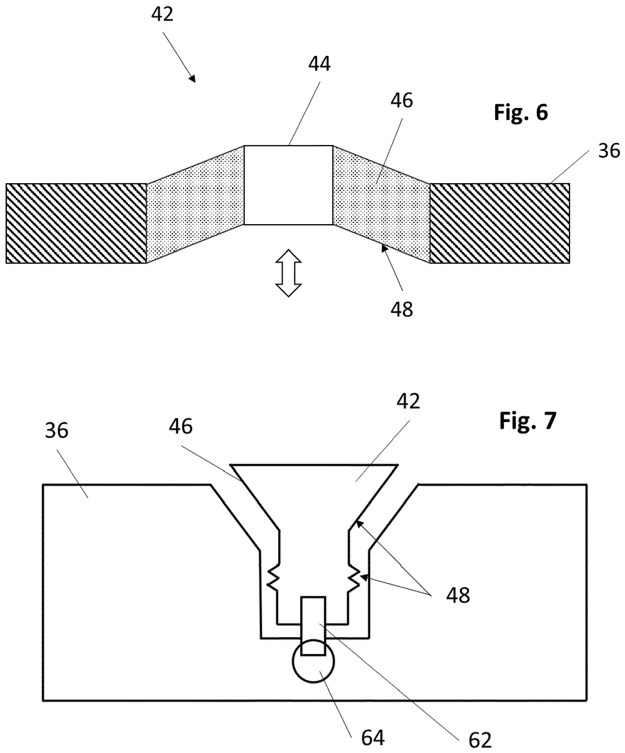

Bei der Ausführung gemäß Fig. 6 ist die Berandung 46 aus elastischem Material, beispielsweise Silikon oder Gummi ausgebildet und selbst elastisch verformbar und dadurch beweglich. Insbesondere ist die Berandung 46 als Membran ausgebildet, deren äußerer Rand fest an dem Trägerkörper 36 befestigt ist.

Der Kraftspeicher 48 wird hier durch das Material der Berandung 46 selbst gebildet, alternativ oder zusätzlich können in oder an der als Membran ausgebildeten Berandung 46 nicht dargestellte Federelemente wie Blattfedern oder dergleichen vorgesehen sein, die die Saugdüse 42 in ihre in Fig. 6 gezeigte Ruhestellung vorspannen.

Bei der in Fig. 7 dargestellten Ausführungsform ist die Saugdüse 42 aus einem elastischen Material ausgebildet. Eine Balgausbildung kann vorgesehen sein. Die Saugdüse 42 ist durch einen Stecknippel 62 fest mit einer Kassette (Beispiel für Trägerkörper 36) des Werkstückträgers 26 fest verbunden. Weiter ist in Fig. 7 eine Vakuumbohrung 64 als Beispiel für einen Luftanschluss dargestellt. Bei Vakuumbeaufschlagung wird die Saugdüse 42 zusammengezogen und legt sich an die Seitenwände 66 am Trägerkörper 26 an und bildet so eine ebene Fläche.

Demnach ist bei einigen Ausführungsformen ein Teil der beweglichen Saugdüse 42 fest mit dem Trägerkörper 36 verbunden, die Saugdüse 42 ist aber aufgrund beweglicher Elemente der Saugdüse 42 in sich beweglich und insbesondere in eine Einfahrstellung zurückziehbar.

Bei allen dargestellten Ausführungen der Saugdüse 42 ist diese bei Beaufschlagung mit Unterdruck entgegen der die Saugdüse 42 in Ruhestellung haltenden Kraft (des Kraftspeichers 48) in eine Einfahrstellung bewegbar. In der Einfahrstellung steht die Saugdüse 42 nicht über die Auflagefläche 38 hervor.

Fig. 2 ist der Werkstückträger 26 mit mehreren Saugdüsen 42 in Ruhestellung (Vakuum deaktiviert) dargestellt. Außerdem ist gestrichelt In Fig. 3 und 4 ist der Werkstückträger 26 (hier zu Darstellungszwecken ohne Werkstück 12) mit aktiviertem Vakuum dargestellt, wobei die das Werkstück ansaugenden Saugdüsen 42 in der Einfahrstellung sind.

Der Werkstückträger 26 ist als Transporteinheit eines Transportsystems ausgebildet. In Fig. 2 ist der z.B. als Kassette ausgebildete Trägerkörper 36 auf einem sehr schematisch gestrichelt dargestellten Unterbau 66 angeordnet, der in nicht dargestellter Weise zum Verfahren auf der Bewegungsbahn des Transportsystems ausgebildet ist. Wie insbesondere Fig. 2 entnehmbar, weist die Ansaugeinrichtung 40 wenigstens einen ersten Luftkreis 54.1 mit wenigstens einer ersten Ansaugdüse 56.1 zum Ansaugen des Werkstücks 12 auf die Auflagefläche 38 und einen zweiten Luftkreis 54.2 mit wenigstens einer zweiten Ansaugdüse 56.1 zum Ansaugen des Werkstücks 12 auf die Auflagefläche 38 auf. Der erste und zweite Luftkreis 54.1, 54.2 sind unterschiedlich ansteuerbar.

Bei einigen Ausführungsformen sind die wenigstens eine erste Ansaugdüse 56.1 und die wenigstens eine zweite Ansaugdüse in Form der beweglichen Saugdüse 42.1, 42.2 ausgebildet ist. Die Anzahl der beweglichen Saugdüsen 42.1, 42.2 pro Luftkreis 54.1, 54.2 richtet sich nach Form und Dimension des Werkstücks 12. Ebenfalls richtet sich die Anzahl der Luftkreise 54.1, 54.2 nach der Form und Dimension des Werkstücks, es können auch mehr als in Transportrichtung nacheinander angeordnete Luftkreise vorgesehen sein.

Bei der dargestellten Ausführung - siehe Fig. 4 - sind zwei erste bewegliche Saugdüsen 42.1 als erste Ansaugdüsen 56.1 und zwei zweite bewegliche Saugdüsen 42.2 als zweite Ansaugdüsen 56.2 vorgesehen.

Die wenigstens eine erste Ansaugdüse 56.1 ist in Transportrichtung vor der wenigstens einen zweiten Ansaugdüse 56.2 angeordnet.

Der erste Luftkreis 54.1 weist eine erste Luftkammer 58.1 in dem Trägerkörper 36 auf. Die wenigstens eine erste bewegliche Saugdüse 42.1 ist an die erste Luftkammer 58.1 angeschlossen. Der zweite Luftkreis 54.2 weist eine zweite Luftkammer 58.2 in dem Trägerkörper 36 auf. Die wenigstens eine zweite bewegliche Saugdüse 42.2 ist an die zweite Luftkammer 58.2 angeschlossen.

Der erste Luftkreis 54.1 weist weiter einen ersten Luftanschluss (nicht dargestellt) seitlich (z.B. an der in Fig. 4 oben dargestellten Seite) oder auf der der Auflagefläche 38 entgegengesetzten Seite (d.h. der in Fig. 2 unten dargestellten Seite) des Trägerkörpers 36 auf. Über den ersten Luftanschluss wird ein Unterdruck oder Vakuum in der ersten Luftkammer 58.1 aktiviert. Der zweite Luftkreis 54.2 weist einen zweiten Luftanschluss (nicht dargestellt) seitlich oder auf der der Auflagefläche 38 entgegengesetzten Seite des Trägerkörpers 36 auf. Über den zweiten Luftanschluss wird ein Unterdruck oder Vakuum in der zweiten Luftkammer 58.2 aktiviert.

Beispielsweise ist eine Vakuumpumpe 68 mitfahrend - hier z.B. an dem Unterbau 66 - angeordnet. Die Vakuumpumpe 68 ist beispielsweise als Membranpumpe ausgebildet. Ein Stromanschluss für die Vakuumpumpe 68 ist an der Transporteinheit verfügbar. Die Ansaugseite der Vakuumpumpe 68 ist mittels eines durch die Steuerung 28 ansteuerbaren ersten Ventil 70.1 an die erste Luftkammer 58.1 anschließbar. Weiter ist die Ansaugseite der Vakuumpumpe 68 mittels eines durch die Steuerung 28 ansteuerbaren zweiten Ventils 70.2 an die zweite Luftkammer anschließbar. So kann durch Schalten des entsprechenden ersten oder zweiten Ventils 70.1, 70.2 das Vakuum in der jeweiligen Luftkammer 58.1, 58.2 aktiviert werden.

Optional ist die Abblasseite der Vakuumpumpe 68 mit einem durch die Steuerung 28 ansteuerbaren dritten Ventil 70.3 an die erste Luftkammer 58.1 und mit einem durch die Steuerung 28 ansteuerbaren vierten Ventil 70.3 an die zweite Luftkammer 58.2 angeschlossen.

Bei bevorzugten Ausführungen werden die Volumina in dem Trägerkörper 36 so klein wie möglich ausgeführt, um kurze Zeiten zum Aufbau oder Abbau des Vakuums oder eventuell auch eines kurzen Überdrucks zu ermöglichen. Bei einigen Ausführungsform ist auch noch ein mitfahrender Vakuumspeicher vorgesehen (nicht dargestellt).

Bei anderen, hier nicht dargestellten Ausführungsformen liegen die Luftanschlüsse des ersten und zweiten Luftkreises 54.1, 54.2 in Transportrichtung versetzt zueinander, und entlang der Führungsbahn des in Fig. 1 dargestellten Transportsystem befindet sich in dem Streckenbereich, wo Vakuum aktiviert werden soll, ein Anschlusskanal, an den die Luftanschlüsse des daran vorbei fahrenden Werkstückträgers 26 andocken können, so dass sie im Vorbeifahren an eine Saugeinrichtung angeschlossen sind, um das Vakuum zu aktivieren.

In Fig. 1 ist sind die Übernahme- und Übergabeprozesse zum Übernehmen und Übergeben des Werkstücks 12 schematisch dargestellt.

Der von rechts in Fig. 1 zugestellte ganz rechts dargestellte Werkstückträger 26 (auch Warenträger genannt) fährt mit ausgefahrenen Saugdüsen 42.1, 42.2 (auch Saugnosseln genannt) unter die Materialbahn 14 (z.B. bahnförmiges Elektrodensubstrat, oder Elektrodenbahn). Diese wird von der Zuführeinrichtung 16 zugeführt.

Unterhalb der Zuführeinrichtung 16 wird wie an der Übernahmestelle 60 dargestellt, der vorauseilende Luftkreis (z.B. der erste Luftkreis 54.1) unter Vakuum gesetzt und die Materialbahn 14 wird so an den Werkstückträger 26 angesaugt. Durch das entstehende Vakuum zieht sich die erste Saugdüse 42.1 wie in Fig. 3 dargestellt zusammen und zieht die Materialbahn 14 auf die Oberfläche - Auflagefläche 38 - des Werkstückträgers 26.

Im darauffolgenden Schritt wird der Vorgang der Aktivierung des Vakuums für alle nacheilenden Luftkreise (z.B. den zweiten Luftkreis 54.2 und für alle eventuell vorhandenen diesem nachfolgende Luftkreise) wiederholt.

An der Schneideinrichtung 18 wird die Materialbahn 14 in einzelne Teile zerteilt.

An der Übergabestelle 34 wird das Vakuum im vorauseilenden Luftkreis (z. B. dem ersten Luftkreis 54.1) zerstört. Beispielsweise wird bei Verwendung der in Fig. 2 dargestellten Ausführung das entsprechende Ventil 70.1-70.4 angesteuert, um Vakuum abzuschalten bzw. auf Gegenblasen umzuschalten. Die Vakuumpumpe 68 kann dabei noch weiter laufen. Wie in Fig. 2 dargestellt hat die Vakuumpumpe einen Abluftanschluss, der für das Gegenblasen verwendet wird. Bei anderen Ausführungsformen endet beispielsweise an der Übergabestelle 34 der Ansaugkanal, so dass der erste Luftanschluss nicht mehr an die Saugpumpe oder dergleichen angedockt ist.

Durch das Deaktivieren des Unterdrucks/Vakuums geht die wenigstens eine erste Saugdüse 42.1 in ihre ursprüngliche Form zurück. Hierdurch wird das Werkstück 12 beschädigungsfrei an die Transporteinrichtung 20 angelegt und an dieser fixiert. Bei der dargestellten Ausführung wird das Werkstück 12 an die Vakuumtrommel 22 angelegt und von dieser angesaugt. Das Werkstück 12 ist zu keinem Zeitpunkt frei schwebend und verliert dadurch nicht die Position.

Bei einigen Ausführungsformen wird hier der entsprechende Luftkreis mit Überdruck versorgt, um das Werkstück 12 schneller zu übergeben. Beispielsweise wird hier mittels Ventilen 70.3, 70.4 ein Überdruck in die Luftkammer 58.1, 58.2 eingeleitet. Bei anderen Ausführungen ist an der Übergabestelle 34 ein mit Überdruck versorgter Druckanschluss vorgesehen, an den der entsprechende Luftanschluss bei Vorbeifahren kurz andockt.

Im weiteren Verlauf wird in zeitlichem Abstand das Vakuum in den nachlaufenden Luftkreisen (z.B. dem zweiten Luftkreis 54.2 und allen eventuellen weiteren nachfolgenden, an der Übergabestelle 34 vorbeifahrenden Luftkreisen) zerstört.

Die Vereinzelungsvorrichtung 10 ist somit, insbesondere durch Programmierung mit einem entsprechenden, in dem Speicher 32 gespeicherten Computerprogramm, dazu eingerichtet, ein Vereinzelungsverfahren zum Vereinzeln von flachen Werkstücken 12 von einer Materialbahn 14 durchzuführen, welches die folgenden Schritte umfasst:
a) Bereitstellen der Materialbahn 14,
b) Aufnehmen der Materialbahn 14 mit mehreren der nacheinander in einer Transportrichtung bewegten Werkstückträger 26, wobei zuerst eine in Transportrichtung vordere bewegliche Saugdüse 42.1 mit Unterdruck beaufschlagt wird und dann eine in Transportrichtung hintere bewegliche Saugdüse 42.2 mit Unterdruck beaufschlagt wird,
c) Transportieren der Werkstückträger 26 mit daran angesaugter Materialbahn 14 durch die Schneideinrichtung 18 und Schneiden der Materialbahn 14 zwischen zwei aufeinander folgenden Werkstückträgern 26, um auf den Werkstückträgern 26 liegende Segmente der Materialbahn 14 zu Werkstücken 12 zu vereinzeln;
d) Übergeben der Werkstücke 12 an die rotierende Vakuumtrommel 22 zum Abtransport, wobei zunächst eine in Transportrichtung vordere bewegliche Saugdüse 42.1 unterdrucklos und dann eine in Transportrichtung hintere bewegliche Saugdüse 42.2 unterdrucklos geschaltet wird.

Schritt d) enthält bei bevorzugten Ausgestaltungen einen oder mehrere der folgenden Schritte:
d1) Gegenblasen durch die unterdrucklos geschaltete Saugdüse 42.1, 42.2, um die Übergabezeit zur Übergabe des Werkstücks 12 zu verkürzen;
d2) Anlegen des Werkstücks 12 an die Vakuumwalze 22 unter Anwendung der die jeweilige Saugdüse 42, 42.1, 42.2 in Ruhestellung haltenden Kraft als Rückstellkraft; und/oder
d3) Auferlegen einer Rückstellkraft der jeweiligen Saugdüse 42, 42.1, 42.2 auf das Werkstück 12, um dieses gegen die Vakuumwalze 22 zu drücken, um einen Positionsverlust bei der Übergabe zu verhindern.

Durch die in Fig. 1 gezeigte Anordnung kann ein kontinuierlicher Prozess und Materialfluss genauso ermöglicht werden, wie ein getakteter Materialfluss.

In Fig. 2 ist der Werkstückträger 26 (hier mit Trägerkörper 36 in Form einer Kassette) in der Seitenansicht zu sehen. In den Grundkörper - Trägerkörper 36 - des Werkstückträgers sind die in Fig. 2 schematisch dargestellten, wenigstens zwei Luftkreise 54.1, 54.2 integriert. An diese getrennt steuerbaren Luftkreise 54.1, 54.2 sind die beweglichen Saugdüsen 42, 42.1, 42.2 als Ansaugdüsen 56.1, 56.2 angeschlossen.

In Fig. 3 ist der Werkstückträger 26 mit aktiviertem Vakuum im Schnitt dargestellt.

Wird das Vakuum aktiviert, so ziehen sich die Saugdüsen 42.1, 42.2 bei Auflegen eines Werkstücks 12 so weit zurück, dass sie eine ebene Fläche mit dem Werkstückträger 26 ergeben. Das Werkstück 12 kann so beschädigungsfrei angesaugt werden.

In Fig 4 ist der Werkstückträger 26 in Draufsicht zu erkennen. Dargestellt ist eine mögliche Anordnung von beweglichen Saugdüsen 42, 42.1, 42.2. Diese sind in mehrere Luftkreise 54.1, 54.2 aufgeteilt und getrennt ansteuerbar.

### Bezugszeichenliste:

- 10: Vereinzelungsvorrichtung
- 12: Werkstück
- 14: Materialbahn
- 16: Zuführeinrichtung
- 18: Schneideinrichtung
- 20: Transporteinrichtung
- 22: Vakuumtrommel
- 24: Transportsystem
- 26: Werkstückträger
- 28: Steuerung
- 30: Prozessor
- 32: Speicher
- 34: Übergabestelle
- 36: Trägerkörper
- 38: Auflagefläche
- 40: Ansaugeinrichtung
- 42: Saugdüse
- 42.1: erste Saugdüse
- 42.2: zweite Saugdüse
- 44: Düsenöffnung
- 46: Berandung
- 48: Kraftspeicher
- 50: Membranfeder
- 52: Dichtung
- 54.1: erster Luftkreis
- 54.2: zweiter Luftkreis
- 56.1: erste Ansaugdüse
- 56.2: zweite Ansaugdüse
- 58.1: erste Luftkammer
- 58.2: zweite Luftkammer
- 60: Übernahmestelle
- 62: Stecknippel
- 64: Vakuumbohrung
- 66: Unterbau
- 68: Vakuumpumpe
- 70.1: erstes Ventil
- 70.2: zweites Ventil
- 70.3: drittes Ventil
- 70.4: viertes Ventil

## Patentansprüche

1. Werkstückträger (26) zum Übernehmen, Transportieren und Übergeben eines als Segment einer Materialbahn (14) ausgebildeten Werkstücks (12), mit einer an einem Trägerkörper (36) ausgebildeten Auflagefläche (38) zum Auflegen des Werkstücks (12) und einer Ansaugeinrichtung (40) zum Ansaugen des Werkstücks (12) auf der Auflagefläche (38), wobei die Ansaugeinrichtung (40) wenigstens eine bewegliche Saugdüse (42, 42.1, 42.2) aufweist, die in Ruhestellung aus der Auflagefläche (38) hervorsteht und bei Beaufschlagung mit Unterdruck entgegen einer die Saugdüse (42, 42.1, 42.2) in Ruhestellung haltenden Kraft in eine Einfahrstellung bewegbar ist, in der die Saugdüse (42, 42.1, 42.2) nicht über die Auflagefläche (38) hervorsteht.

2. Werkstückträger (26) nach Anspruch 1, **dadurch gekennzeichnet,**
**dass** die Ansaugeinrichtung (40) wenigstens einen ersten Luftkreis (54.1) mit wenigstens einer ersten Ansaugdüse (56.1) zum Ansaugen des Werkstücks (12) auf die Auflagefläche (38) und einen zweiten Luftkreis (54.2) mit wenigstens einer zweiten Ansaugdüse (56.2) zum Ansaugen des Werkstücks (12) auf die Auflagefläche (38) aufweist, wobei der erste (54.1) und zweite Luftkreis (54.2) unterschiedlich ansteuerbar sind.

3. Werkstückträger (26) nach Anspruch 2, **dadurch gekennzeichnet,**
**dass** die wenigstens eine erste Ansaugdüse (56.1) als erste bewegliche Saugdüse (42.1) ausgebildet ist und/oder dass die wenigstens eine zweite Ansaugdüse (56.2) als zweite bewegliche Saugdüse (42.2) ausgebildet ist.

4. Werkstückträger (26) nach einem der Ansprüche 2 oder 3, **dadurch gekennzeichnet, dass** die wenigstens eine erste Ansaugdüse (56.1) in Transportrichtung vor der wenigstens einen zweiten Ansaugdüse (56.2) angeordnet ist.

5. Werkstückträger (26) nach einem der Ansprüche 2 bis 4, **dadurch gekennzeichnet, dass** der erste Luftkreis (54.1) eine erste Luftkammer (58.1) in dem Trägerkörper (36) aufweist, wobei wenigstens eine erste bewegliche Saugdüse (42.1) an die erste Luftkammer (58.1) angeschlossen ist, und dass der zweite Luftkreis (54.2) eine zweite Luftkammer (58.2) in dem Trägerkörper (36) aufweist, wobei wenigstens eine zweite bewegliche Saugdüse (42.2) an die zweite Luftkammer (58.2) angeschlossen ist.

6. Werkstückträger (26) nach Anspruch 5, **dadurch gekennzeichnet,**
**dass** die erste Luftkammer (58.1) einen ersten Luftanschluss seitlich oder auf der der Auflagefläche (38) entgegengesetzten Seite des Trägerkörpers (36) aufweist und die zweite Luftkammer (58.2) einen zweiten Luftanschluss seitlich oder auf der der Auflagefläche (38) entgegengesetzten Seite des Trägerkörpers (38) aufweist.

7. Werkstückträger (26) nach einem der Ansprüche 2 bis 6, **dadurch gekennzeichnet, dass** Luftanschlüsse des ersten und zweiten Luftkreises (54.1, 54.2) in Transportrichtung versetzt zueinander liegen.

8. Werkstückträger (26) nach einem der voranstehenden Ansprüche, **dadurch gekennzeichnet,**
**dass** der Werkstückträger (26) als Transporteinheit eines Transportsystems (24) mit einzeln bewegbaren Transporteinheiten ausgebildet ist.

9. Transportsystem (24) umfassend eine Führungsbahn und mehrere Werkstückträger (26) nach einem der voranstehenden Ansprüche, die als Transporteinheiten einzeln entlang der Führungsbahn beweglich sind.

10. Verwenden eines Werkstückträgers (26) nach einem der Ansprüche 1 bis 8 bei der Herstellung von Elektroden für eine Batteriezelle.

11. Vereinzelungsvorrichtung (10) zum Vereinzeln von flachen Werkstücken (12) von einer Materialbahn (14), umfassend eine Zuführeinrichtung (16) zum Zuführen der Materialbahn (14), eine Schneideinrichtung (18) zum Schneiden der Materialbahn (14), um die Werkstücke (12) zu erhalten, eine Vakuumtrommel (22) zum Abtransport der Werkstücke (12) und eine Reihe von Werkstückträgern (26) nach einem der Ansprüche 1 bis 8 oder ein Transportsystem (24) nach Anspruch 9 sowie eine computerimplementierte Steuerung (28), die die Werkstückträger (26) ansteuert zum Aufnehmen der Materialbahn (14), Transport durch die Schneideinrichtung (18) und Übergabe der Werkstücke (12) auf die Vakuumtrommel (22).

12. Vereinzelungsverfahren zum Vereinzeln von flachen Werkstücken (12) von einer Materialbahn (14), umfassend
a) Bereitstellen der Materialbahn (14),
b) Aufnehmen der Materialbahn (14) mit mehreren nacheinander in einer Transportrichtung bewegten Werkstückträger (26) nach einem der Ansprüche 1 bis 8, wobei zuerst eine in Transportrichtung vordere bewegliche Saugdüse (42.1) mit Unterdruck beaufschlagt wird und dann eine in Transportrichtung hintere bewegliche Saugdüse (42.2) mit Unterdruck beaufschlagt wird,
c) Transportieren der Werkstückträger (26) mit daran angesaugter Materialbahn (14) durch eine Schneideinrichtung (18) und Schneiden der Materialbahn (14) zwischen zwei aufeinander folgenden Werkstückträgern (26), um auf den Werkstückträgern (26) liegende Segmente der Materialbahn (14) zu Werkstücken (12) zu vereinzeln;
d) Übergeben der Werkstücke (12) an eine Vakuumtrommel (22) zum Abtransport, wobei zunächst eine in Transportrichtung vordere bewegliche Saugdüse (42.1) unterdrucklos und dann eine in Transportrichtung hintere bewegliche Saugdüse (42.2) unterdrucklos geschaltet wird.

13. Vereinzelungsverfahren nach Anspruch 12, **dadurch gekennzeichnet, dass** Schritt d) wenigstens einen oder mehrere der folgenden Schritte umfasst:
d1) Gegenblasen durch die unterdrucklos geschaltete Saugdüse (42.1, 42.2), um die Übergabezeit zur Übergabe des Werkstücks (12) zu verkürzen;
d2) Anlegen des Werkstücks (12) an die Vakuumwalze (22) unter Anwendung der die jeweilige Saugdüse (42, 42.1, 42.2) in Ruhestellung haltenden Kraft als Rückstellkraft;
d3) Auferlegen einer Rückstellkraft der jeweiligen Saugdüse (42, 42.1, 42.2) auf das Werkstück (12), um dieses gegen die Vakuumwalze (22) zu drücken, um einen Positionsverlust bei der Übergabe zu verhindern.

14. Verwendung einer Vereinzelungsvorrichtung (10) nach Anspruch 11 oder eines Vereinzelungsverfahren nach Anspruch 12 oder 13 bei der Herstellung von Batteriezellen, insbesondere zur Vereinzelung von Elektroden von einer Elektrodenbahn.

15. Computerprogramm, umfassend Anweisungen, die eine Vereinzelungsvorrichtung (10) nach Anspruch 11 veranlassen, das Vereinzelungsverfahren nach Anspruch 12 oder 13 durchzuführen.
